(19) Europäisches Patentamt
European Patent Office
Office européen des brevets

(11) **EP 3 722 799 B1**

(12) **EUROPÄISCHE PATENTSCHRIFT**

(45) Veröffentlichungstag und Bekanntmachung des Hinweises auf die Patenterteilung:
**11.09.2024   Patentblatt 2024/37**

(21) Anmeldenummer: **19168532.0**

(22) Anmeldetag: **10.04.2019**

(51) Internationale Patentklassifikation (IPC):
**G01N 29/24** *(2006.01)*      **G01N 27/83** *(2006.01)*

(52) Gemeinsame Patentklassifikation (CPC):
**G01N 27/83; G01N 29/2412**

(54) **VERFAHREN ZUR BESTIMMUNG DER GEOMETRIE EINES OBJEKTS AUF BASIS VON DATEN ZERSTÖRUNGSFREIER MESSVERFAHREN**

METHOD FOR DETERMINING THE GEOMETRY OF AN OBJECT BASED ON DATA FROM NONDESTRUCTIVE MEASUREMENT METHODS

PROCÉDÉ DE DÉTERMINATION DE LA GÉOMÉTRIE D'UN OBJET EN FONCTION DES DONNÉES DU PROCÉDÉ DE MESURE NON DESTRUCTIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2019   EP 19168281**

(43) Veröffentlichungstag der Anmeldung:
**14.10.2020   Patentblatt 2020/42**

(73) Patentinhaber: **Rosen IP AG**
**6370 Stans (CH)**

(72) Erfinder:
• **Danilov, Andrey**
  **49809 Lingen (DE)**

• **Peußner, Matthias**
  **49492 Westerkappeln (DE)**

(74) Vertreter: **Wischmeyer, André et al**
**Busse & Busse**
**Patent- und Rechtsanwälte**
**Partnerschaft**
**Großhandelsring 6**
**49084 Osnabrück (DE)**

(56) Entgegenhaltungen:
**US-A1- 2016 187 523     US-B1- 6 541 964**

**Beschreibung**

Die Erfindung betrifft ein Verfahren zur Bestimmung der Geometrie eines metallischen, insbesondere magnetisierbaren Objekts, insbesondere eines Rohres oder eines Tanks.

Derartige Objekte werden mittels zerstörungsfreier Messverfahren auf Fehlstellen untersucht. Die Ergebnisse der Messverfahren werden ausgewertet, um auf die Art und/oder Größe von Fehlstellen zurückschließen zu können. Hiervon ausgehend kann dann bestimmt werden, wie stark das Objekt beispielsweise belastet werden kann oder ob und in welchem Umfang Reparaturmaßnahmen oder ein Austausch des Objekts nötig sind. Um unnötige Maßnahmen zu verhindern, kommt es darauf an, die Fehlstellen und ihre Geometrie möglichst genau beschreiben zu können.

Ein Beispiel für ein derart zu untersuchendes Objekt ist eine Pipeline. Eine der wesentlichen Aufgaben von Pipelineinspektionen, insbesondere mit sogenannten intelligenten Molchen, ist die Vorhersage sicherer Betriebsbedingungen, die sich aus dem Zustand der Pipeline ergeben. Insbesondere interessiert Pipelinebetreiber der Zustand etwaiger Schweißnähte und die Anzahl und Größe von Fehlstellen, auf deren Basis eine Belastbarkeitsgrenze und davon abhängig ein maximaler Betriebsdruck einstellbar ist. Der sog. "burst pressure", d.h. der Druck ab dem eine Pipeline zerstört wird, wird zur quantitativen Bestimmung der Belastbarkeitsgrenze verwendet. Fehlstellen sind beispielsweise Bereiche mit Metallverlusten aufgrund von Korrosion, Rissen oder anderen Schwächungen an einer Wand eines insbesondere zur Bevorratung oder zum Transport von flüssigen oder gasförmigen Medien vorgesehenen Objekts. Hierzu zählen beispielsweise Rohre, Pipelines oder Tanks.

Es können verschiedene zerstörungsfreie Messverfahren zum Einsatz kommen. Während MFL-Untersuchungen unter Betrachtung der magnetische Streuflussdichte (MFL-Messverfahren) vorzugsweise für das Auffinden von Fehlstellen aufgrund von Korrosion verwendet werden, werden weitere, insbesondere Ultraschall ausnutzende Verfahren für die Detektion von Rissen an der Innen- oder Außenseite eines Objekts eingesetzt. Zu diesen zerstörungsfreien Messverfahren zählen elektromagnetisch-akustische Verfahren (EMAT-Verfahren), bei denen aufgrund von Wirbelstrom induzierten Magnetfeldern Schallwellen, insbesondere in Form von geführten Wellen, in der Rohrwand des zu untersuchenden Objekts erzeugt werden, sowie direkt Ultraschall in die Objektwand einleitende Verfahren, nachfolgend Ultraschallverfahren bzw. UT-Verfahren genannt. Oberflächennahe, insbesondere kleinere Risse werden im Stand der Technik auch mit Wirbelstrom-Messverfahren, nachfolgend EC-Messverfahren genannt, gesucht.

Es ist Stand der Technik, für die Messung der Korrosion eines Objekts Scans magnetischer Streuflussdaten (MFL-Daten) aufgrund von magnetischer Streuflussmessungen (MFL-Messungen) zur Bestimmung der Größe der (Korrosions-) Fehlstellen von speziell geschulten Personen auswerten zu lassen.

Gleiches gilt für die Auswertung von aufgrund von EMAT-, UT- und EC-Messverfahren gewonnenen Messdaten.

So zeigt die US 2016/0187523 A1 einen elektromagnetischen Sensor zur zerstörungsfreien Inspektion von Rohrleitungen in Bohrlöchern. Durch die in US 2016/0187523 A1 beschriebene Auswertung der erhaltenen Messwerte können die Anzahl der Rohre im einem Bohrloch, die Dimensionen der Rohre wie Durchmesser und Wandstärke sowie die Anwesenheit von Defekten wie Korrosion, Risse, Löcher oder abnehmende Wandstärken ermittelt werden.

US 6,541,964 B1 zeigt eine Vorrichtung für ein zerstörungsfreies Messverfahren sowie ein Verfahren zur Auswertung der Messergebnisse, um den Hydridgehalt in einem elektrisch leitfähigen Substrat zu ermitteln. Das Verfahren basiert auf einem Verfahren zur Bestimmung von Schichtdicken, insbesondere der Dicke einer Oxidschicht, von Brennstäben aus einer Zirkoniumlegierung. Die Schichtdicken sowie der Hydridgehalt des Substrats können mit dem Verfahren der US 6,541,964 B1 durch die Auswertung von mit einem einzigen Messvorgang erhaltenen Daten bestimmt werden.

Um eine Auswertung zu erhalten, die unabhängig von der die Auswertung vornehmenden Person ist und vorzugsweise auch schneller und/oder zuverlässiger erfolgt, ist eine automatisierte Auswertung der Messdaten der zerstörungsfreien Messverfahren wünschenswert. Problematisch ist hierbei, dass die Messergebnisse der zerstörungsfreien Messverfahren nicht nur in Folge von Fehlstellen verändert werden, sondern auch durch lokale Veränderungen der Geometrie des Objekts. Diese treten beispielsweise im Bereich von Schweißnähten, An- und/oder Einbauten des Objekts auf. Hierbei kann es sich um am Objekt angebrachte Tragstrukturen, das Objekt umfassende Klammern, an das Objekt angebaute Messtechnik, Absperrtechnik und/oder abzweigende Rohrleitungen handeln. Weiterhin können an dem Objekt im Rahmen des kathodischen Korrosionsschutzes Opferanoden angebracht oder in vorherigen Inspektionen erkannte, mit Fehlstellen behaftete Bereiche durch aufgebrachtes Material verstärkt worden sein. Für eine automatisierte Behandlung ist es notwendig, Abweichungen aufgrund von derartigen Einbauten von Abweichungen aufgrund von tatsächlichen Fehlstellen unterscheiden zu können.

Aufgabe ist somit, ein Verfahren bereit zu stellen, durch das eine Geometrie für eine nachfolgende automatisierte Analyse von Fehlstellen auf Basis von Messdaten zumindest eines zerstörungsfreien Messverfahrens erstellt werden kann, und auf dessen Basis eine Belastbarkeitsgrenze eines Objekts bestimmt werden kann.

Diese Aufgabe wird gelöst durch das erfindungsgemäße Verfahren gemäß Anspruch 1 sowie durch ein Verfahren nach Anspruch 15. Vorteilhafte Ausgestaltungen der Erfindung sind den auf diese Ansprüche rückbezogenen Unteransprüchen sowie der nachfolgenden Beschreibung zu entnehmen.

Durch das erfindungsgemäße Verfahren nach Anspruch 1 wird auf Basis eines durch zumindest eine Messung durch zumindest ein zerstörungsfreies Messverfahren erzeugten Referenzdatensatzes des Objekts eine Repräsentation der fehlstellenfreien Geometrie des Objekts in Form eines Objektgitters erstellt. Dieses kann Repräsentationen von Schweißnähten sowie An- und/oder Einbauten umfassen. Eine solche Repräsentation des realen, mittels zerstörungsfreier Messverfahren vermessenen Objekts ist ein geeigneter Ausgangspunkt für eine anschließende Bestimmung von Fehlstellen bzw. Fehlstellen-Geometrien und die Berechnung der verbleibenden Belastbarkeit des untersuchten Objekts.

Die Bestimmung des Objektgitters kann für das untersuchte Objekt in seiner Gesamtheit oder lediglich für einzelne Teilbereiche durchgeführt werden. Es können auch mehrere einzelne Teilbereiche so gewählt werden, dass die jeweiligen Auswertungen der Teilbereiche in der Gesamtheit einer Auswertung des gesamten untersuchten Objekts entsprichen.

Erfindungsgemäß ist vorgesehen, dass auf Basis von zumindest Teilen des zumindest einen Referenzdatensatzes eine Klassifizierung von anomaliefreien Bereichen und anomaliebehafteten Bereichen des Objekts erfolgt. Anomaliebehaftete Bereiche des Referenzdatensatzes sind hier räumliche Gebiete, den von benachbarten Gebieten signifikant abweichende Messdaten zugeordnet sind. Es wird davon ausgegangen, dass diese Anomalien auf Fehlstellen zurückzuführen sind. Anomaliefreie Bereiche sind vorzugsweise zusammenhängende Gebiete, in denen sich die durch das zerstörungsfreie Messverfahren gemessenen Messwerte nicht oder nur innerhalb eines gewissen Toleranzbereichs verändern, in denen der Gradient der Veränderung unterhalb bestimmter Grenzwerte bleibt, die Abweichung einzelner Messwerte von einem Mittelwert geringer als ein bestimmter Schwellenwert ist und/oder die Abweichung eines Mittelwerts in einem lokalen Bereich von den Mittelwerten der angrenzenden lokalen Bereichen unterhalb eines Schwellenwertes ist. Weitere Kriterien zur Klassifizierung anomaliefreier Bereiche sind denkbar. Anomaliebehaftete Bereiche sind dann die verbleibenden Bereiche. Weiterhin ist die Verwendung eines neuronalen Netzes, das auf diese Aufgabe trainiert wurde, denkbar. Hierbei wird auf explizit vorgegebene Schwellenwerte verzichtet. Alternativ kann auch eine Bestimmung der anomaliebehafteten Bereiche vorgenommen werden, wobei die verbleibenden Bereiche dann anomaliefreie Bereiche darstellen. Diese Methoden können auch kombiniert werden.

Durch das erfindungsgemäße Verfahren wird ein Ausgangsobjektgitter erstellt, wobei vorbekannte Informationen über das Objekt, bei Pipelines beispielsweise der Pipelinedurchmesser sowie die Wandstärke, verwendet werden. Ausgehend von dem Ausgangsobjektgitter wird durch eine Simulationsroutine ein Vorhersagedatensatz des zumindest einen zerstörungsfreien Messverfahrens errechnet. Hierzu wird eine virtuelle Messung mit dem zerstörungsfreien Messverfahren auf Basis des Ausgangsobjektgitters simuliert. Anschließend erfolgt ein Vergleich von zumindest Teilen des Vorhersagedatensatzes mit zumindest Teilen des zumindest einen Referenzdatensatzes, wobei die anomaliebehafteten Bereiche des Referenzdatensatzes bzw. des Objekts in dem Vergleich ausgeschlossen werden. Wenn die verglichenen Daten ausreichend genau übereinstimmen, wird das Ausgangsobjektgitter als hinreichend genaue Repräsentation der tatsächlichen Form des defektfreien Objekts angesehen und kann in weiteren Verfahren für die Auswertung der Fehlstellen verwendet werden. Andernfalls findet in der EDV-Einheit eine iterative Anpassung des Ausgangsobjektgitters an die Geometrie des Objekts in den anomaliefreien Bereichen statt. Hierzu wird ein neues Ausgangsobjektgitter erstellt, und für dieses durch die Simulationsroutine ein neuer Vorhersagedatensatz errechnet. Ein Vergleich von zumindest Teilen des neuen Vorhersagedatensatzes mit zumindest Teilen des zumindest einen Referenzdatensatzes unter Ausschluss der anomaliebehafteten Bereiche erfolgt um die Übereinstimmung zu bestimmen. Dieses wird solange wiederholt, bis ein Stop-Kriterium für die iterative Anpassung erreicht wird. Das dann vorliegende Ausgangsobjektgitter wird als die Geometrie des Objekts beschreibendes Objektgitter verwendet.

Um ein Ausgangsobjektgitter zu erhalten, dass das fehlstellenfreie untersuchte Objekt im ausgewerteten Abschnitt oder in seiner Gesamtheit repräsentiert, findet vorzugsweise eine Interpolation oder Extrapolation von Informationen des Referenzdatensatzes und/oder Objektgitters von den anomaliefreien Bereichen in die anomaliebehafteten Bereiche statt. Es können beispielsweise nach der Klassifizierung des Referenzdatensatzes in anomaliebehaftete und anomaliefreie Bereiche die Informationen aus den anomaliefreien Bereichen in die anomaliebehafteten Bereiche interpoliert und/oder extrapoliert werden und ein so erhaltener Hilfsreferenzdatensatz bei der Bestimmung des Objektgitters verwendet werden. Es ist auch denkbar, zunächst ein Objektgitter nur für die als anomaliefrei klassifizierten Bereiche zu erstellen. Dieses Objektgitter weist im Bereich der anomaliebehafteten Bereiche Lücken auf, die anschließend mittels Interpolation oder Extrapolation aus den anomaliefreien Bereichen geschlossen werden können. Auf diese Weise wird ein die Geometrie des Objekts repräsentierendes Objektgitter erhalten, das dann für weitere Analysen von Fehlstellen bzw. Fehlstellengeometrien in den anomaliebehafteten Bereichen verwendet werden kann.

Es ist auch denkbar, dass Verfahren jeweils nur abschnittsweise durchzuführen und diese Abschnitte anschließend zu einem Objektgitter zusammenzusetzen. Gegebenenfalls ist es auch ausreichend, lediglich ein lokales Objektgitter in einem bestimmten Umfeld um einen anomaliebehafteten Bereich zu erstellen, um anschließend auf diesen lokalen Objektgitter eine Bestimmung der Fehlstellengeometrie durchzuführen.

Das erfindungsgemäße Verfahren wird vollständig und insbesondere automatisiert auf einer EDV-Einheit, die gegebenenfalls aus mehreren Rechnern bestehen kann, durchgeführt. Das zugehörige Rechenprogramm kann ein einziges Programm sein oder es kann sich um ein Programmpaket umfassend eine Mehrzahl von Programmmodulen handeln, die beispielsweise ressourcenbedingt verteilt auf unterschiedlichen EDV-Systemen oder -untereinheiten ablaufen und dort auf jeweiligen EDV-Medien gespeichert sein können. Ein Rechner weist insbesondere die typischen Mittel einer Datenverarbeitungseinheit wie ein oder mehrere Prozessoren, zumindest temporären Speicher (RAM), Datenkommunikationsmittel, Anzeige- und/oder Eingabeeinheiten auf.

Vorzugsweise wird die Simulationsroutine durch Vorgabe von Parametern eingerichtet, die Materialeigenschaften des Objekts, die Geometrie eines im zerstörungsfreien Messverfahren verwendeten Sensors, den Abstand des Sensors von der Objektoberfläche und/oder Betriebsbedingungen des Sensors repräsentieren. Die Simulationsroutine muss an das konkret zu lösende Problem angepasst werden, um zuverlässige Lösungen errechnen zu können. Hierzu wird häufig eine Messung mit dem jeweiligen zerstörungsfreien Messverfahren an einem Objekt mit bekannter Geometrie durchgeführt. Mit dieser bekannten Geometrie wird durch die Simulationsroutine ein virtueller Messlauf simuliert. Die Simulationsroutine kann als eingerichtet angesehen werden, wenn bei einem Vergleich der aufgenommenen Messwerte und der simulierten Messwerte die Unterschiede unterhalb einer bestimmten Grenze bleiben. Die Simulationsroutine gibt dann ausreichend zuverlässige Ergebnisse aus. Die Einrichtung der Simulationsroutinge kann durch iterative Veränderung eines oder mehrere Parameter eingerichtet werden. Zur Einrichtung der Simulationsroutine können Parameter vorgegeben werden, die bekannte Eigenschaften des zu messenden Objekts bzw. des verwendeten Messverfahrens repräsentierten. Bei den Betriebsbedingungen können zum Beispiel die Vorschubgeschwindigkeit des Sensors, bei magnetischen Sensoren die magnetische Feldstärke, bei Ultraschallsensoren die Anregungsfrequenz und/oder die Eigenschaften eines Kopplungsmediums berücksichtigt werden. Hierdurch kann die Einrichtung der Simulationsroutine vereinfacht und schneller durchgeführt werden.

Vorzugsweise erfolgt die Klassifizierung in anomaliefreie Bereiche und anomaliebehaftete Bereiche auf Basis von zumindest Teilen von zumindest zwei durch unterschiedliche zerstörungsfreie Messverfahren erhaltener Referenzdatensätze. Die Klassifizierung kann gleichzeitig auf beiden Referenzdatensätzen oder nacheinander erfolgen. Hierzu müssen die Datensätze so aufbereitet werden, dass sie bezüglich ihrer Ortsinformationen übereinstimmen. Dann ist sichergestellt, dass eine Fehlstelle, die in beiden Messverfahren gemessen wird, auch als dieselbe Fehlstelle identifiziert werden kann. Die Kombination von Teilen von Referenzdatensätzen, die durch zwei unterschiedliche zerstörungsfreier Messverfahren erhalten wurden, ermöglicht eine zuverlässigere Klassifizierung.

Bestimmte Messverfahren sind für bestimmte Fehlstellen sensibler als andere. Während MFL-Messverfahren sowie EC-Messverfahren besonders gut geeignet sind, um Oberflächendefekte wie beispielsweise Korrosion aufzufinden, sind die Ultraschall-basierte EMAT- und UT-Messverfahren besonders gut geeignet, um Risse und andere Gefügeveränderungen im Inneren einer Wand des Objekts zu erfassen. Durch die Verbindung von Referenzdatensätzen, die mit unterschiedlichen zerstörungsfreien Messverfahren erhalten werden, kann somit die Genauigkeit der Klassifizierung erhöht werden. Anomaliebehaftete Bereiche, die in einem Messverfahren nicht unbedingt als solches erkannt worden wären, können gegebenenfalls durch den Referenzdatensatz des weiteren Messverfahrens dennoch ausgeschlossen werden. Dies verbessert die Erstellung eines Objektgitters in den anomaliefreien Bereichen.

Bevorzugt werden als zerstörungsfreie Messverfahren die vorbezeichneten MFL-, EMAT-, UT- und EC-Messverfahren eingesetzt. Besonders bevorzugt findet in dem Verfahren ein erster auf Basis eines MFL-Messverfahrens, insbesondere mit axialer oder umlaufender Magnetisierung erzeugter Referenzdatensatz und zumindest ein weiterer auf Basis eines Wirbelstrom-, EMAT- oder Ultraschall-Messverfahrens erzeugten Referenzdatensatz Verwendung. Sofern ein Messverfahren wie z.B. ein EMAT-Verfahren einen Datensatz mit mehreren Unterdatensätzen erzeugt, z.B. aufgrund mehrerer Signale aufzeichnende Sensoren, werden im Verfahren dann vorzugsweise alle Unterdatensätze verwendet. Im Fall von Referenzdaten, die mittels EMAT-Verfahren gewonnen wurden, handelt es sich bei den Referenzdatensätzen vorzugsweise um über die Zeit integrierte Amplituden ("Counts") an den jeweiligen Wandpositionen bzw. Messpositionen, die sogenannten A-Scans.

Besonders bevorzugt sind folgende Kombinationen von Messverfahren:

a) ein erster Referenzdatensatz auf Basis einer MFL-Messung und ein weiterer Referenzdatensatz auf Basis einer EMAT-Messung, oder
b) ein erster Referenzdatensatz auf Basis einer MFL-Messung und ein weiterer Referenzdatensatz auf Basis einer UT-Messung, oder
c) ein erster Referenzdatensatz auf Basis einer MFL-Messung, ein weiterer Referenzdatensatz auf Basis einer EMAT-Messung und ein weiterer Referenzdatensatz auf Basis einer EC-Messung.

Die auf Basis von MFL-Messungen erzeugten Referenzdatensätze können vorzugsweise noch differenziert werden hinsichtlich der Richtung der Magnetisierung.

Vorzugsweise erfolgt bei der Klassifizierung eine Zuordnung eines anomaliefreien Bereichs zu einem vordefinierten lokalen Element des Objekts. Dieses wird bei der Erstellung des Ausgangsobjektgitters verwendet bzw. in das Ausgangsobjektgitter eingefügt. Dieser Schritt vereinfacht das Erstellen eines Ausgangsobjektgitters. Wie oben geschildert, kann das mittels der zerstörungsfreien Messverfahren untersuchte Objekt Schweißnähte, Ein- und/oder Anbauten enthalten, oder eine anderweitig vorbekannte lokal modifizierte Geometrie aufweisen. Die Erstellung des Objektgitters kann erleichtert werden, wenn diese vorbekannten Informationen bei der Erstellung verwendet werden. Hierfür werden entsprechende Elemente, wie beispielsweise Schweißnähte, Anbauten wie Stützelemente, Klammern, Verstärkungselemente oder beispielsweise Opferanoden eines kathodischen Rostschutzes, sowie zu Reparaturzwecken angebrachte Sleeves in ihrer Form und/oder Ausdehnung vordefiniert. Die Messergebnisse der zerstörungsfreien Messverfahren sehen in diesen Bereichen naturgemäß anders aus, als in Bereichen einer unveränderten Wandung des Objekts, beispielsweise der Pipelinewand bei Pipelines. Diese Änderungen sind jedoch gleichförmig und im Vergleich zu den meisten Fehlstellen großflächig. Weiterhin sind sie dadurch, dass die die Veränderung verursachenden Elemente in ihrer Lage bekannt sind, erwartbar. Für Betreiber von Pipelines sind besonders die Schweißnähte interessant, da diese regelmäßig in Pipelines zu finden sind. Neben der Form der Schweißnähte ist insbesondere eine nachfolgende Untersuchung bzw. Auswertung im Bereich einer Schweißnaht auf Fehlstellen interessant. Diese kann bisher nicht bzw. nur mit großem Aufwand durchgeführt werden.

Durch Vorgabe der lokalen Elemente kann in der Klassifizierung eine Erkennung durchgeführt werden, ob es sich hierbei beispielsweise um eine Schweißnaht oder um eine Stützstruktur handelt. Das so erkannte Element kann dann mit seiner bekannten generellen Form beziehungsweise generellen Abmessung bei der Erstellung des Ausgangsobjektgitters verwendet oder nachträglich an der entsprechenden Stellen in das Ausgangsobjektgitter eingefügt werden, um dieses an die tatsächliche Form des untersuchten Objekts anzupassen.

Besonders bevorzugt wird das jeweilige lokale Element dabei mittels eines parametrischen Geometriemodells beschrieben. Hierdurch kann der Aufwand bei der Erstellung des Objektgitters deutlich reduziert werden. Hierzu werden die vorbekannten Informationen über das lokale Element verwendet. Über eine Schweißnaht kann beispielsweise bekannt sein, dass sie sich in Umfangsrichtung um das Objekt herum erstreckt und durch eine Schweißnahtbreite sowie eine Überhöhung ausreichend genau beschreiben lässt. Somit kann eine Anpassung eines vordefinierten parametrischen Geometriemodells eines lokalen Elements an die tatsächliche lokale Form des Objekts durch eine Variation nur weniger Parameter erfolgen. Das Verfahren zur Erstellung eines Objektgitters wird hierdurch wesentlich beschleunigt. Insbesondere bei einer iterativen Anpassung des Ausgangsobjektgitters kann eine Veränderung lediglich eines oder mehrerer Parameter des parametrischen Geometriemodells erfolgen. Die Variation einzelner Parameter kann zudem durch bestimmte Grenzwerte, innerhalb derer sie modifiziert werden können, begrenzt werden. Durch eine derartige Begrenzung kann die Gefahr minimiert werden, physikalisch unsinnige Ergebnisse zu erhalten. Die Zuverlässigkeit des Verfahrens wird erhöht.

Alternativ oder zusätzlich kann eine Anpassung des Ausgangsobjektgitters in dem iterativen Verfahren durch Gittermodifikation erfolgen. Hierbei bleibt das Gitter als solches, insbesondere die Verbindungen eines Gitterpunktes mit seinen benachbarten Gitterpunkten bzw. die Gitterelemente erhalten. Die Lage eines Gitterpunktes bzw. der Abstand zu den benachbarten Gitterpunkten kann jedoch variiert werden. Gegebenenfalls kann auch einer Gitterteilung mit der Einfügung neuer Gitterpunkte erfolgen. Gittermodifikationen können mit einem relativ geringen rechnerischen Aufwand durchgeführt werden. Das Verfahren kann somit einfach und schnell durchgeführt werden. Zudem ist die generelle Topologie des Gitters bekannt. Weiterhin können Gitterelemente verwendet werden, die für eine freie, automatische Gittererstellung weniger gut geeignet sind.

Alternativ kann bei der iterativen Anpassung das Ausgangsobjektgitter auch durch das Berechnen eines neuen Gitters innerhalb einer veränderten Kontur des Ausgangsobjektgitters erstellt werden. Hierbei werden lediglich die Randpunkte des Objektgitters verschoben und ein neues Objektgitter erstellt. Die Simulationsroutine errechnet auf Basis des neuen Objektgitters einen neuen Vorhersagedatensatz. Ein solches Verfahren ist rechenintensiver, ermöglicht jedoch die Behandlung von Objektgittern, die signifikante Verformungen in iterativen Verfahren erfordern oder beispielsweise Löcher aufweisen.

Bevorzugt wird das erhaltene Objektgitter anschließend zur Bestimmung von Fehlstellengeometrien in den anomaliebehafteten Bereichen verwendet. Die Verwendung eines gemäß dem erfindungsgemäßen Verfahren erhaltenen Objektgitters bei der Bestimmung einer Fehlstellengeometrie ermöglicht die Fehlstellengeometriebestimmung auch in Bereichen von Schweißnähten und/oder An- bzw. Einbauten im Objekt. Ohne eine Erstellung eines entsprechenden Objektgitters ist in diesen Bereichen eine automatisierte Auswertung schwierig. Ein automatisiertes Auswerteverfahren muss erkennen, ob eine Abweichung der Messergebnisse von simulierten Messergebnissen einer erwartenden Objektgeometrie, bei Pipelines beispielsweise eine einfache Rohrform, auf Fehlstellen zurückgeht oder auf Modifikation der Messergebnisse durch Schweißnähte bzw. An- oder Einbauten. Zudem muss für die Bestimmung von Fehlstellen in diesen Bereichen bekannt sein, welcher Anteil an den Veränderungen auf die Ein- und/oder Ausbauten beziehungsweise Schweißnähte zurückgeht und welche auf Fehlstellen, die in diesen Bereichen angeordnet sind. Durch die Verwendung der mit dem erfindungsgemäßen Verfahren bestimmten Objektgeometrie in einem nachfolgenden Verfahren zur Bestimmung der Fehlstellengeometrie in einem Objekt können diese Probleme effizient adressiert werden. Das erfindungsgemäße Verfahren ermöglicht somit in einem nachgeschalteten Verfahren die Erkennung von Fehlstellengeometrien in Bereichen, die anderweitig für die maschinelle Auswertung nicht zugänglich wären.

Gemäß einer Weiterbildung der Erfindung ist vorgesehen, die Bestimmung der Geometrie einer oder mehrerer Fehlstellen mittels zumindest zweier über unterschiedliche, zerstörungsfreie Messverfahren erzeugter Referenzdatensätze vorzunehmen, wobei von wenigstens einer, vorzugsweise einer Mehrzahl von insbesondere im Wettbewerb zueinander stehenden Experten-Routinen mit jeweils zumindest einer eigenen Suchstrategie bzw. zumindest einem eigenen Algorithmus, auf eine gleiche Ausgangsfehlstellengeometrie zurückgegriffen wird. Die Experten-Routinen werden insbesondere parallel auf einer EDV-Einheit ausgeführt. Bei Verwendung einer einzigen Experten-Routine kann diese auf verschiedene Algorithmen zur Anpassung der Fehlstellengeometrie zugreifen.

Das Verfahren bestimmt die Geometrie einer oder mehrerer realer, untersuchter Fehlstellen eines metallischen und insbesondere magnetisierbaren Objekts, insbesondere eines Rohres oder eines Tanks, ausgehend von einem auf Basis zumindest zweier, über unterschiedliche, zerstörungsfreie Messverfahren erzeugte Referenzdatensätze des Objekts. Hierbei wird das Objekt zumindest teilweise auf oder durch das mit dem erfindungsgemäßen Verfahren erhaltene zumindest zweidimensionale, vorzugsweise dreidimensionale Objektgitter in einer EDV-Einheit dargestellt.

Das erfindungsgemäße Verfahren umfasst gemäß eine vorteilhaften Ausgestaltung eine Bestimmung, insbesondere eine Erzeugung, einer anfänglichen Fehlstellengeometrie als Ausgangsfehlstellengeometrie. Die Ausgangsfehlstellengeometrie kann direkt auf dem Objektgitter abgebildet oder durch dieses dargestellt werden, sie kann jedoch ebenfalls in einer ParameterDarstellung, beispielsweise auf einem zumindest zweidimensionalen Defektgitter, vorliegen.

Weiterhin wird eine Bestimmung, insbesondere eine Erzeugung, jeweiliger, d.h. zum zerstörungsfreien Messverfahren passender Vorhersagedatensätze als Ausgangsvorhersagedatensätze auf Basis der gemeinsamen Ausgangsfehlstellengeometrie vorgenommen. Dies erfolgt durch Simulation oder Zuweisung einer zum jeweiligen Referenzdatensatz passenden Messung.

Anschließend erfolgt eine iterative Anpassung der Ausgangsfehlstellengeometrie an die Geometrie der realen Fehlstelle oder Fehlstellen mittels der EDV-Einheit, wobei diese Anpassung vorzugsweise mittels wenigstens einer, vorzugsweise mehrerer im Wettbewerb zueinander und insbesondere parallel zueinander laufender Experten-Routinen erfolgt, wobei in der bzw. jeweiligen Experten-Routinen mittels wenigstens eines eigenen Algorithmus bzw. einer eigenen Suchstrategie und auf Basis der Ausgangsfehlstellengeometrie eine jeweilige Experten-Fehlstellengeometrie erzeugt wird.

Einen eigenen Algorithmus weist die Experten-Routine dann auf, wenn sich wenigstens einer der der Experten-Routine zur Verfügung stehenden Algorithmen zur Anpassung der Fehlstellengeometrie von den Algorithmen einer weiteren Experten-Routine zumindest teilweise unterscheidet. Vorzugsweise können stochastische Prozesse zur Differenzierung der Algorithmen unterschiedlicher Experten-Routinen verwendet werden. Jede Experten-Routine weist zumindest einen Algorithmus zur Anpassung der Fehlstellengeometrie auf, vorzugsweise stehen zumindest einer Experten-Routine mehrere Algorithmen zur Verfügung. Ebenfalls kann innerhalb einer Experten-Routine die Auswahl eines Algorithmus auf Basis stochastischer Prozesse erfolgen oder vorgegeben werden.

Es ist weiterhin vorgesehen, dass auf Basis der jeweiligen Experten-Fehlstellengeometrie ein jeweiliger Experten-Vorhersagedatensatz, insbesondere durch Simulation oder Zuweisung einer zum jeweiligen Referenzdatensatz passenden Messung bestimmt wird, wobei die dem jeweiligen Experten-Vorhersagedatensatz zugrunde liegende Experten-Fehlstellengeometrie wenigstens einer, vorzugsweise mehreren und insbesondere allen der Experten-Routinen als neue Ausgangsfehlstellengeometrie zur weiteren Anpassung an die Geometrie der realen Fehlstelle bzw. der realen Fehlstellen zur Verfügung gestellt wird, wenn der jeweilige Experten-Vorhersagedatensatz dem jeweiligen Referenzdatensatz ähnlicher ist als der entsprechende Ausgangsvorhersagedatensatz und/oder eine die zumindest zwei Experten-Vorhersagedatensätze berücksichtigende Fitnessfunktion verbessert ist. Anschließend, d.h. für die in der Iteration nächsten Vergleiche der jeweiligen Experten-Fehlstellengeometrien mit der neuen Ausgangsfehlstellengeometrie, werden die zur neuen Ausgangsfehlstellengeometrie gehörende Experten-Vorhersagedatensätze als neue Ausgangsvorhersagedatensätze verwendet.

Ein Maß für die Ähnlichkeit kann auch über die Fitnessfunktion gebildet werden, so dass beispielsweise in einer Ausführungsvariante sogar dann eine neue Ausgangsfehlstellengeometrie von einer Experten-Routine für die weiteren Iterationsschritte bereitgestellt wird, wenn sich eine- dann allerdings wesentliche-Annäherung nur eines der simulierten oder zugewiesenen Experten-Vorhersagedatensätze an den jeweiligen Referenzdatensatz ergibt.

Ein einfacher Vergleich der Experten-Vorhersagedatensätze mit den Referenzdatensätzen auf Basis der Experten-Fehlstellengeometrie ergibt sich beispielsweise wie folgt:

$$E = \sum_i |Y^i_{cal}(x_1 \dots x_n) - Y^i_m|,$$

wobei $Y^i_m$- das (geometrisch in der Regel zweidimensional vorliegende Messdatensignal) des $i$ - ten Messverfahrens und $Y_{cal}^i$ - das simulierte Signal des zugehörigen Messverfahrens ist. Weiterhin werden als $x_1 ... x_n$ die über eine oder mehrere Experten-Routinen variierten Fehlstellengeometrien bezeichnet. Je kleiner E ist, desto besser entsprechen die berechneten Fehlstellengeometrien den tatsächlich vorliegenden.

Die iterative Anpassung mittels der Experten-Routinen erfolgt schließlich solange, bis ein Experten-Stopp-Kriterium erfüllt ist. Es werden erfindungsgemäß auf Basis derselben Ausgangsfehlstellengeometrie erzeugte (zugewiesene oder insbesondere simulierte Experten-Vorhersagedatensätze) messmethodenspezifisch mit den jeweiligen Referenzdatensätzen verglichen und damit die Nachteile der aus dem Stand der Technik bekannten getrennten Auswertung vermieden. Im messmethodenspezifischen Vergleich wird z.B. ein simulierter EMAT-Scan mit dem auf Basis der realen Messung gewonnenen EMAT-Referenzdatensatz verglichen, ein simulierter MFL-Scan mit dem auf Basis der realen Messung gewonnen MFL-Referenzdatensatz verglichen, etc..

Durch den Zugriff auf dieselbe Fehlstellengeometrie und die Überlagerung der Geometrien verschiedener Defekte kann die Berechnung des burst pressures des untersuchten Objekts um zumindest 10% - 20% genauer erfolgen und z.B. eine Pipeline mit höheren Drücken betrieben werden. Außerdem muss aufgrund der automatisierten, kombinierten Betrachtung der Referenzdatensätze unterschiedlicher Messmethoden und der sich hieraus ergebenden verbesserten Beschreibung der Defektgeometrien seltener eine In-Augenscheinnahme des untersuchten Objekts z.B. durch Ausgrabung durchgeführt werden. Darüber hinaus wird über die kombinierte Auswertung auf Basis unterschiedlicher Messverfahren gewonnener Daten das Problem singulärer, lokaler Lösungen minimiert, d.h. die Bestimmung der Fehlstellengeometrie verhält sich robuster.

Wenn der Vergleich zwischen den Referenzdatensätzen und den jeweiligen Experten-Vorhersagedatensätzen einer Experten-Routine ergibt, dass diese, gegebenenfalls wie vorbeschrieben in Abhängigkeit einer Fitnessfunktion dichter an den Referenzdatensätzen liegen als die vorherigen Ausgangsvorhersagedatensätze, so wird die zugehörige Experten-Fehlstellengeometrie als Ausgangsfehlstellengeometrie für die weiteren sowie für die entsprechende Experten-Routine zur Verfügung gestellt. Ausgehend von dieser Lösung wird in einem nächsten Iterationsschritt von dieser Geometrie gestartet, es sei denn, eine weitere Experten-Routine hat beispielsweise während der noch laufenden eigenen Fehlstellengeometriebestimmung eine wiederum bessere Lösung gefunden, die dann weiteren bzw. allen Experten-Routinen zur Verfügung gestellt wird.

Bei den insbesondere im Wettbewerb zueinander stehenden Experten-Routinen werden vorzugsweise diejenigen hinsichtlich der zur Verfügung stehenden Ressourcen der EDV-Einheit bevorzugt, die wie nachfolgend beschrieben erfolgreicher in der Annäherung an die realen Messdaten sind als andere im Wettbewerb stehende Experten-Routinen. Ressourcen der EDV-Einheit sind insbesondere die CPU- oder GPU-Zeit und/oder die oder eine Priorisierung in der Speicherbelegung.

Vorteilhafterweise laufen die Experten-Routinen (auf der EDV-Einheit) dergestalt im Wettbewerb zueinander, dass die Verteilung der Ressourcen der EDV-Einheit, insbesondere in Form von Rechenzeit, an eine jeweilige Experten-Routine in Abhängigkeit einer Erfolgsquote, bei der insbesondere die Anzahl der von der Experten-Routine berechneten und für eine oder mehrere andere Experten-Routinen zur Verfügung gestellten Ausgangsfehlstellengeometrien berücksichtigt wird, und/oder in Abhängigkeit einer Reduktion einer Fitnessfunktion, bei der insbesondere die Anzahl der für die Reduktion erzeugten Experten-Vorhersagedatensätze berücksichtigt wird, erfolgt. Der Wettstreit der Experten-Routinen ergibt sich insbesondere dadurch, dass von dem als Überwachungsroutine ausgebildeten Programmteil den jeweiligen Experten-Routinen dann vermehrt Ressourcen insbesondere in Form von Rechenzeit, vorzugsweise CPU- oder GPU-Zeit zugewiesen wird, wenn diese erfolgreicher sind als andere Experten-Routinen. Erfolgreich ist eine Experten-Routine dann, wenn sie eine mit einer zum Referenzdatensatz passenderen beispielsweise simulierten EMAT-Messung versehene Fehlstellengeometrie gefunden hat, die den anderen Experten-Routinen zur Verfügung gestellt wird.

Hieraus kann sich zum Beispiel ergeben, dass einzelne, besonders erfolgreiche Experten-Routinen mehr als 50% der gesamten zur Verfügung stehenden Rechenzeit erhalten, was die Gesamtdauer des erfindungsgemäßen Verfahrens deutlich reduziert. Gleichzeitig kann programmseitig vorgegeben werden, dass keine oder einzelne der Experten-Routinen nicht unter einen bestimmten Prozentsatz an Rechenzeit gelangen, um das Problem von singulären und exotischen Fehlstellengeometrien bzw. -ergebnissen aus den einzelnen Routinen zu vermeiden. So kann für den Fall, dass eine bis dahin erfolgreiche Experten-Routine nur eine lokale und keine globale Lösung findet, ein Ausweg aus der ansonsten im Stand der Technik vorkommenden Blockade-Situation gefunden werden.

Die Anpassung mittels der Experten-Routinen erfolgt solange, bis ein Experten-Stopp-Kriterium erfüllt ist. Hierbei handelt es sich beispielsweise um einen residualen Unterschied bezüglich der gemessenen und simulierten Messdaten. Es kann sich auch um ein externes Experten-Stopp-Kriterium beispielsweise auf Basis der zur Verfügung stehenden Rechenzeit oder um eine insbesondere vorgebbare Anzahl von Iterationen oder eine insbesondere vorgebbare oder vorgegebene oder aus der zur Verfügung stehenden Rechenzeit bestimmte Rechenzeit handeln. Das Experten-Stopp-Kriterium kann auch eine Kombination dieser Kriterien sein.

Es hat sich herausgestellt, dass die Genauigkeit der Fehlstellenbestimmung durch dieses Verfahren qualitativ verbessert ist. Eine sich hieraus ergebende Berechnung der maximalen Belastbarkeit zeigt, dass zum Beispiel Pipelines deutlich länger betrieben werden können. Die Genauigkeit der Fehlstellenbestimmung ist deutlich erhöht. Sich aus der simulierten Fehlstellengeometrie nach dem vor- und nachbeschriebenen Verfahren ergebene maximale Betriebsdrücke können um zumindest 10% - 20% und insbesondere bis zu 50% höher angesetzt werden, was für den Betrieb der Pipeline und deren Betreiber die Wartungs- und Unterhaltungskosten signifikant reduziert. Erstmalig lässt sich nunmehr auch für MFL-Datensätze eine adäquate Bestimmung des ASME B31G-2012 level 2 Ansatzes ("river bottom profile") für den "remaining strength algorithm" realisieren.

In einer erfindungsgemäßen Weiterbildung des Verfahrens erfolgt eine Bestimmung einer Belastbarkeitsgrenze eines zumindest im Betrieb druckbelasteten und insbesondere als Öl-, Gas- oder Wasserpipeline ausgebildeten Objekts, wobei bei dem Verfahren ein eine oder mehrere Fehlstellen beschreibender Datensatz als Eingangsdatensatz in einer insbesondere als Vorwärtsmodellierung ausgebildeten Berechnung der Belastbarkeitsgrenze verwendet wird, wobei der Eingangsdatensatz zunächst gemäß dem vor- oder nachbeschriebenen Verfahren zur Bestimmung der Geometrie einer Fehlstelle erzeugt wird. Die vorteilhafte Darstellung der Fehlstellengeometrie, insbesondere als nicht-parametrisierte echte dreidimensionale Geometrie bzw. als zweidimensionale Fläche mit jeweiligen Tiefenwerten, macht bisher in der Industrie als notwendig vermutete Vereinfachungen überflüssig, so dass auch aus diesem Grund eine Steigerung der Genauigkeit der Fehlstellenbestimmung als Ganzes in bisher nicht erreichbarer Weise gewährleistet wird.

War bisher die Genauigkeit auf die Angabe des Punktes der Maximaltiefe der Fehlstelle beschränkt, wird nun das gesamte Profil mit hoher Genauigkeit ermittelt. Typischerweise wird die Genauigkeit der Maximaltiefe auf das in Abhängigkeit der Messgenauigkeit erreichbare Maß reduziert, also etwa $\pm$ 5% der Wandstärke im Vergleich zu bisher etwa $\pm$ 10% der Wandstärke bei dem Sizing nach dem eingangs beschriebenen Stand der Technik. Allerdings erreicht die Vorhersage der Belastbarkeitsgrenze in Abhängigkeit von der Geometrie der Fehlstelle gerade für kritische Fälle in der Genauigkeit Steigerungen von beispielsweise bisher $\pm$50% auf nun $\pm$5%. Der erfindungsgemäße Vorteil liegt somit insbesondere in einer erstmalig erreichten adäquaten Darstellung der Fehlstellengeometrie, die genau diese Steigerung erst ermöglicht.

Weitere Vorteile und Einzelheiten der Erfindung können der nachfolgenden Figurenbeschreibung entnommen werden. Schematisch dargestellt zeigt:

Fig. 1: einen Ablaufplan für eine Bestimmung eines das fehlstellenfreie Objekt repräsentierenden Objektgitters

Fig. 2: ein das fehlstellenfreie Objekt repräsentierendes Objektgitter

Fig. 3. ein das fehlstellenfreie Objekt im Bereich einer Schweißnaht repräsentierendes Objektgitter

Fig. 4: das Objektgitter gemäß Fig. 3 in einer 3D-Darstellung

Fig. 5: ein parametrisches Geometriemodel für die Repräsentation des Objekts im Bereich einer Schweißnaht.

Fig. 6 eine schematische Darstellung einer Weiterbildung des erfindungsgemäßen Verfahrens,

Fig. 7 eine nähere Erläuterung eines Teils der Fig.6,

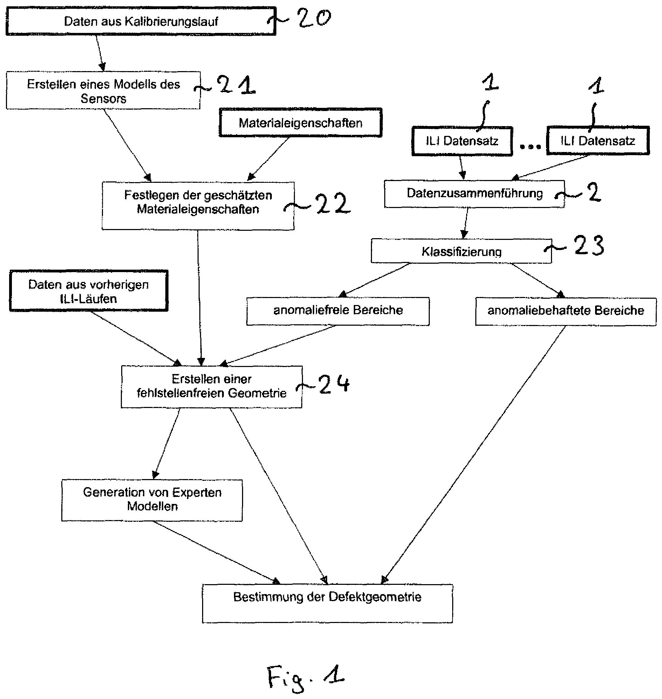

Fig. 1 zeigt den Ablauf einer möglichen Implementierung des erfindungsgemäßen Verfahrens. Auf Grundlage von Messdaten 20 aus einer oder mehrerer Kalibrierungsmessungen mit einem zerstörungsfreien Messverfahren an einem Kalibrierungsobjekt bekannter Geometrie, insbesondere mit Fehlstellen bekannter Geometrie, wird ein Model für den zerstörungsfreien Sensor 21 erstellt. Diese wird für die Simulation von Messdaten bzw. Referenzdatensätzen benötigt. Mit einer Abschätzung der relevanten Materialeigenschaften des untersuchten Objekts wird in Schritt 22 eine Simulationsroutine eingerichtet. Dies kann durch Vorgabe bekannter Parameter geschehen, die die Materialeigenschaften sowie Eigenschaften des verwendeten Sensors repräsentieren. Alternativ oder zusätzlich kann eine iterative Anpassung der Parameter erfolgen, bis die Ergebnisse der Simulationsroutine für das verwendete zerstörungsfreie Messverfahren auf Basis der bekannten Geometrie des Kalibrierungsobjekts ausreichend genau mit den Messdaten der Kalibrierungsmessung übereinstimmen. Die Simulationsroutine kann auch vorbereitet sein und für mehrere Messungen mittels des zerstörungsfreien Messverfahrens wiederverwendet werden.

Auf Basis einer oder mehrerer Messungen mit einem oder mehreren zerstörungsfreien Messverfahren werden ein oder mehrere Referenzdatensätze erstellt. Fig. 1 zeigt in Schritt 2 die Erstellung eines Referenzdatensatzes auf Basis der Datensätze 1 mehrerer Messläufe. Auf Basis des Referenzdatensatzes wird in Schritt 23 eine Klassifizierung durchgeführt in anomaliefreie Bereiche und anomaliebehaftete Bereiche. Durch die Verwendungen von zwei oder mehr Referenzdatensätzen, die auf Basis unterschiedlicher zerstörungsfreier Messverfahren erhalten wurden, kann die Klassifizierung noch einmal verbessert werden, da einzelne Messverfahren für bestimmte Fehlstellen sensibler sind als für andere.

Auf Grundlage der anomaliefreien Bereiche und unter Verwendung der Simulationsroutine wird in Schritt 24 ein das die intakte Geometrie des Objekts repräsentierendes Objektgitter erstellt. Hierzu können auch Informationen von vorherigen Messläufen in dem noch ohne bzw. mit weniger Fehlstellen behaftete Objekt verwendet werden. Das Objektgitter kann in den anomaliefreien Bereichen erstellt und anschließend durch extrapolieren und/oder interpolieren in die anomaliebehafteten Bereiche vervollständigt werden. Es ist auch denkbar, eine Interpolation und/oder Extrapolation auf Basis der Referenzdatensätze aus den anomaliefreien Bereichen in die anomaliebehafteten Bereiche vorzunehmen.

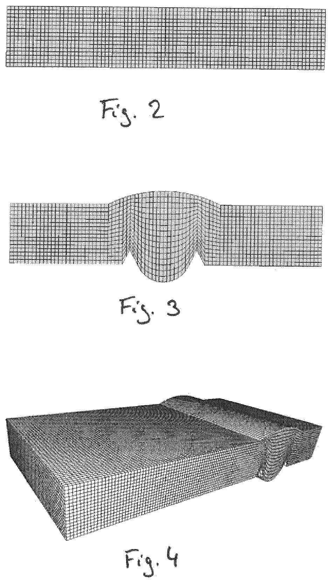

Die Erstellung des Objektgitters in Schritt 24 erfolgt durch einen iterativen Prozess. Es wird ein erstes Ausgangsobjektgitter geraten oder beispielsweise auf Basis einer geschätzten Objektgeometrie vorgegeben. Diese wird in einem iterativen Verfahren angepasst. Ein Ausgangsobjektgitter kann beispielsweise ein in Fig. 2 dargestelltes Objektgitter sein. Wenn das untersuchte Objekt in diesem Bereich eine Schweißnaht ausweist, wird eine iterative Anpassung des Ausgangsobjektgitters erfolgen, bis es eine die Schweißnaht repräsentierende Form aufweist, wie in Fig. 3 und Fig. 4 gezeigt. Diese Anpassung kann durch mesh morphing, also die Anpassung des Ausgangsobjektgitters durch Verschieben einzelner Gitterpunkte erfolgen.

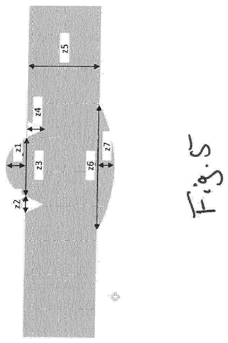

Um das Verfahren zu beschleunigen kann insbesondere auch eine parametrische Beschreibung der Schweißnaht durch ein parametrisches Geometriemodell verwendet werden. Fig. 5 zeigt ein solches parametrisches Geometriemodell. In diesem Modell wird die Form der Schweißnaht durch eine geringe Anzahl an Parametern, vorliegend sieben beschrieben. Die Parameter beschreiben die Wandstärke des Objekts (zs), die jeweilige Ausdehnung der Schweißnaht auf beiden Seiten ($z_3$, $z_6$), die Schweißnahtüberhöhung ($z_1$, $z_7$), sowie Breite und Tiefe von Kerben an der Schweißnaht ($z_2$, $z_4$). Das Objektgitter kann somit im Bereich der Schweißnaht durch Anpassung einer geringen Anzahl von Parametern verändert werden. Hierbei nutzt man vorbekannte Informationen über eine generelle Form eines Objektbereichs, hier einer Schweißnaht, aus. Zusätzliche können für einzelne Parameter Randbedingungen vorgegeben werden. Hierdurch werden physikalisch unsinnige oder unmögliche Ergebnisse ausgeschlossen. In Fig. 5 können die Parameter $z_2$, $z_3$, $z_5$ und $z_6$ zum Beispiel nicht sinnvoll negativ sein, $z_4$ kann sinnvoll nicht größer als z5 sein usw. Die Parameterwerte können durch das folgende Optimierungsproblem bestimmt werden:

$$\{z_1 \ldots z_n\} = arg\, min \sum_i |Y_{cal}^i(z_1 \ldots z_n) - Y_m^i|$$

$$\text{unter Randbedingunen für } \{z_1 \ldots z_n\}$$

mit $Y_m^i$- gemessenes Signal der i-ten Messung, $Y_{cal}^i$ berechnetes Signal für die i-Messung. Werte für die Parameter können über ableitungsfreie Optimierungsalgorithmen, beispielsweise mittels random search, bestimmt werden. Um das Verfahren zu beschleunigen, kann eine Veränderbarkeit der Parameter in festen Schritten, vorzugsweise definiert als Funktion der Wandstärke, festgelegt werden. Beispielsweise kann eine Veränderung in Schritten erfolgen, die 1% der Wandstärke betragen.

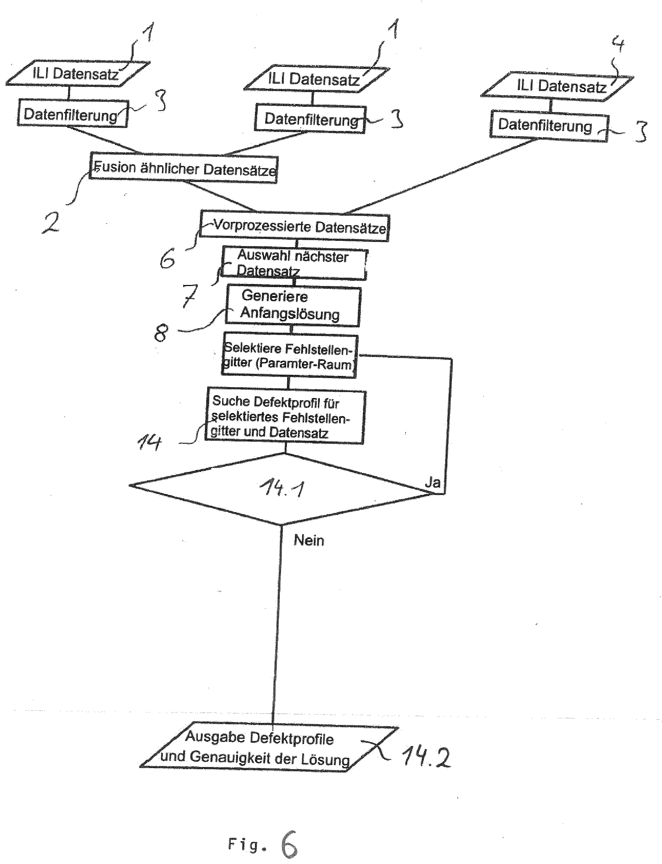

Der erfindungsgemäße Verfahrensablauf ist zumindest abschnittsweise nachfolgend gemäß Fig. 6 beschrieben, wobei eine Mehrzahl der parallel und im Wettbewerb stehenden Experten-Routinen 11 lediglich mit einem Block 14 beschrieben ist.

Als Eingangsdatensätze können beispielsweise mehrere Läufe desselben MFL-Pipelinemolches gemäß Box 2 zusammengeführt werden. Beide Datensätze 1 können zwecks besserer Zusammenführung vorher gefiltert werden und aneinander angeglichen werden (Verfahrensschritt 3), beispielsweise um etwaige Artefakte oder Hintergrundrauschen zu reduzieren. Darüber hinaus wird ein weiterer Datensatz 4 auf Basis eines weiteren Messverfahrens als zusätzlicher Referenzdatensatz in der zugehörigen Box 3 aufbereitet und zwecks Angleichung an identische Gitterstrukturen gefiltert, verwendet, so dass gemäß Verfahrensabschnitt 6 zwei angeglichene Referenzdatensätze, die auf Basis von verschiedenen zerstörungsfreien Messmethoden geschaffen wurden, vorhanden sind.

Genau aneinander angepasste Datensätze können gemeinsam behandelt werden, wobei das erfindungsgemäße Verfahren die gleichzeitige Behandlung der Datensätze durch Verwendung einer Fitnessfunktion, die die zusammen zu betrachtenden Datensätze berücksichtigt, realisiert.

Im Schritt 7 wird auf die in Schritt 6 vorhandenen Referenzdatensätze zugegriffen, wozu in Schritt 8 zunächst eine anfängliche Fehlstellengeometrie als Ausgangsfehlstellengeometrie bestimmt wird. Dies erfolgt wie vorbeschrieben auf Basis eines neuronalen Netzwerkes, in welches die Referenzdatensätze als Eingangsdatensätze eingelesen werden.

Die Lösung des neuronalen Netzwerks wird dann als eine oder mehrere Ausgangsfehlstellengeometrien $x_1 \ldots x_n$ für die einzelnen Expertenmodule zur Verfügung gestellt. Vorab kann mit dem Ziel einer Reduzierung der Rechenzeit die Anzahl der Parameterwerte, die die Fehlstellengeometrien beschreiben, so klein wie möglich gehalten werden. Dies wird beispielsweise über eine dynamische Gitteranpassung erreicht. Da die Anzahl der Tiefenwerte der Anzahl der Knotenpunkte im Defektgitter 5 entspricht, kann die Anzahl der Knoten gleichzeitig auch die Anzahl der Fehlstellenparameter sein. Beginnend bei einem vergleichsweise groben Gitter wird dieses sukzessive in relevanten Bereichen verfeinert.

Beispielhaft kann für einen vorgegebenen Knotenpunktabstand von beispielsweise 14 mm, einer hiermit einhergehenden Gitterzellengröße von 14 mm x 14 mm und Fehlstellengrenzwerten von 30%, 50% und 80% der Wanddicke die in Fig. 5 dargestellte Verfeinerung in dem relevanten Gitterbereich erreicht werden, wobei diejenigen Zellen sukzessive unterteilt werden, die die vorstehenden Tiefenwerte überschreiten. Die Gitterdeformation korreliert dann mit der angenommenen Fehlstellengeometrie, d.h. in Bereichen großer Gradienten befindet sich eine größere Anzahl an Gitterpunkten.

Nachdem nun ein zentral allen Experten-Routinen zur Verfügung gestelltes Fehlstellengitter selektiert wurde, wird anschließend in Schritt 14 fehlstellenspezifisch in jeweiligen Experten-Routinen eine neue Experten-Fehlstellengeometrie berechnet und unter 14.1 überprüft, ob diese den weiteren Experten-Routinen zur Verfügung gestellt werden muss. Dies ist dann der Fall, wenn wie vorbeschrieben z.B. eine Fitness-Funktion verbessert wurde und noch kein Stopp-Kriterium die Fehlstellen-Findung beendet. In diesem Fall geht es mit der oder den insbesondere dann allen Experten-Routinen zur Verfügung gestellten Fehlstellengeometrien in der Iteration weiter. Anderenfalls wird in 14.2. das Verfahren mit Bestimmung der Fehlstellengeometrien und insbesondere der Angabe der Genauigkeit der Lösung beendet. Ergänzend kann auf Basis der gefundenen Fehlstellengeometrien der burst pressure berechnet werden.

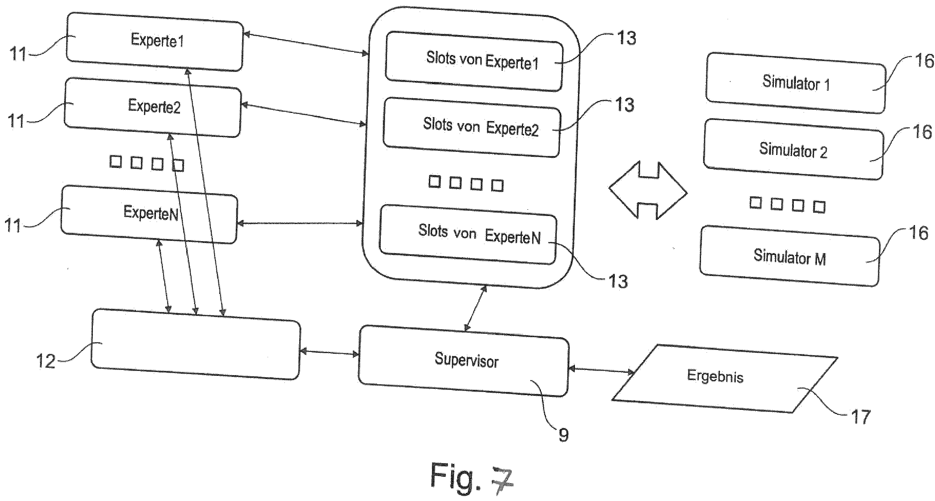

Auf der EDV-Einheit wird gemäß dem erfindungsgemäßen Verfahren der Ablauf des Arbeitsflusses einer Gruppe von Experten-Routinen 11, die miteinander im Wettstreit stehen, simuliert. Hierfür kann das Programm verschiedene Module aufweisen, die unabhängig voneinander und insbesondere nicht miteinander synchronisiert Daten in bestimmte Bereiche der EDV-Einheit einstellen können, damit diese dort weiter verarbeitet werden. Dies erfolgt insbesondere unter Aufsicht einer Überwachungsroutine 9 (Fig. 7). Eine Mehrzahl von Experten-Routinen 11 hält somit in Abhängigkeit von dem vorstehend definierten Erfolg, d.h. z.B. der Anzahl der in einem gemeinsamen Speicherbereich 12 hineingeschriebenen Ausgangsfehlstellengeometrien eine Anzahl von Rechen-Slots 13, um jeweils Experten-Fehlstellengeometrien zu erzeugen und/oder zugehörige MFL-Simulationen durchführen zu können oder im Falle eines unabhängigen MFL-Simulationsmoduls durchführen zu lassen. Dies entspricht dem Block 14 nach Fig. 6, wobei dieser exemplarisch für mehrere Experten-Routinen 11 (Fig. 7) steht. Ausgehend von den einzelnen Rechen-Slots 13 werden gemäß dem vorliegenden Ausführungsbeispiel die Simulationen der zu den einzelnen Experten-Fehlstellengeometrien passenden Messdaten zwecks Erstellung der Experten-Vorhersagedatensätze ebenfalls unter Aufsicht der Überwachungsroutine 9 in den Simulationsmodulen 16 durchgeführt. Je mehr Slots 13 für eine Experten-Routine zur Verfügung steht, desto größer ist der Anteil an EDV-Ressourcen für diese Experten-Routine. Vorzugsweise ist die Anzahl der zur Durchführung von Simulationen vorgesehenen Programmmodule gleich der Anzahl der Slots. Die Überwachungsroutine 9 überwacht die Anzahl der Iterationen und die sich hieraus ergebenden Änderungen der Ausgangsfehlstellengeometrie und überwacht weiter, ob ein zugehöriges Stopp-Kriterium erreicht ist. Anschließend wird das Ergebnis gemäß Block 17, der dem Block 14.2 aus Fig. 6 entspricht, ausgegeben.

Die Anzahl der für eine Experten-Routine 11 zur Verfügung stehenden Rechen-Slots 13 und die anschließend zur Verfügung gestellten Simulationsroutinen können dergestalt variieren, dass eine erste Experten-Routine beispielhaft bis zu 50% der für die Rechen-Slots und Simulationsroutinen zur Verfügung stehenden gesamten Rechenzeit ausnutzen kann.

Im Speicherbereich 12 werden wie dargestellt die Ausgangsfehlstellengeometrien gespeichert. Hierbei kann es sich um einen den Experten-Routinen 11 zugänglichen Speicherbereich handeln. Dort können ebenfalls Log-Dateien der Experten- Routinen 11 und Überwachungs-Routine 9 sowie Anweisungen an die Experten-Routinen 11 hinterlegt werden, die von diesen dann selbständig umgesetzt werden. Beispielsweise kann es sich hierbei um einen Interrupt-Befehl handeln, der bei Erreichen des Stopp-Kriteriums gesetzt wird.

Vorzugsweise sind die Experten-Routinen 11 unabhängige Programmmodule, die neue Experten-Fehlstellengeometrien erzeugen und in die Simulationsroutinen 16 einstellen. Weiterhin kann in den Experten-Routinen 11 die eingangs dargestellte Fitnessfunktion auf Basis des Experten-Vorhersagedatensatzes erzeugt und mit dem im Bereich 12 abgelegten Ausgangsvorhersagedatensatz verglichen werden. Sofern die Experten-Vorhersagedatensätze den Referenzdatensätzen insgesamt ähnlicher ist als die im Bereich 12 abgelegten Datensätze, werden diese Experten-Vorhersagedatensätze dann als neue Ausgangs-Vorhersagedatensätze verwendet.

Beispielsweise wird in den Experten-Routinen 11 eine neue Fehlstellengeometrie zufallsbasiert erzeugt. Hierfür können Maschinenlernalgorithmen oder empirische Regeln verwendet werden. Vorteilhafterweise ist jedoch zur weiterhin verbesserten Konvergenz der Lösungen die Realisierung zumindest zweier nach Art der Fehlstelle fehlstellenspezifisch arbeitenden Basis-Experten-Routinen wie nachfolgend beschrieben vorgesehen.

Diese vorzugsweise immer bei einem erfindungsgemäßen Verfahren realisierten Suchstrategien basieren zur Bestimmung einer korrosionsbasierten Fehlstellengeometrie auf einer angenommenen Wahrscheinlichkeitsverteilung $p(x,y)$ von Gitterpunkten, deren Tiefenwert eine maximale Reduktion der Fitnessfunktion ergeben. Die Wahrscheinlichkeitsfunktion wird verwendet um N Gitterpunkte $(x_n,y_n)$ zu identifizieren. Anstelle von Gitterpunkten $x_n,y_n$ kann auch die vorstehend bereits verwendete Parameterdarstellung der Gruppe von Fehlstellen $(x_1...x_n)$ als Gegenstand der Wahr-

scheinlichkeitsverteilung angenommen werden, wobei sich zum Zwecke der einfacheren Erklärung bei der Wahrscheinlichkeitsverteilung nachfolgend auf N Gitterpunkte (x,y) bzw. ($x_n$,$y_n$) bezogen wird.

An jedem der betrachteten Punkte wird die Tiefenfunktion, die vorliegend die Tiefe D der Korrosion an der Gitterstelle beschreibt, um $\Delta$D geändert, wobei das Vorzeichen der Änderung zufallsgeneriert verteilt wird. Auch die Anzahl der ausgewählten Punkte N kann zufallsbasiert gewählt werden:

$$D_{new}(x, y) = \begin{cases} D(x_n, y_n) \mp \Delta D, \text{ für ausgewählte Punkte} \\ D(x, y), \text{ sonst} \end{cases}$$

Mit einer Auswahl der Wahrscheinlichkeitsfunktion p (x,y) können unterschiedliche Expertenstrategien realisiert werden, beispielhaft:

$$p(x, y) = \frac{D(x,y)}{\|D(x,y)\|}$$

Dieser Algorithmus realisiert eine Variation der Fehlstellentiefen, bei dem die Gitterpunkte mit der größten Tiefe bevorzugt werden. Eine andere Strategie für eine korrosionsbasierte Entwicklung der Experten-Fehlstellengeometrie kann wie folgt aussehen:

$$p(x, y) = \frac{H_{the\ best}(x, y) - H_m(x, y)}{\|H_{the\ best}(x, y) - H_m(x, y)\|}$$

Ein solcher Algorithmus variiert die Fehlstellengeometrie an Positionen, bei denen das simulierte MFL-Messsignal $H_{the\ best}$ für die beste bekannte Lösung den größten Unterschied zum gemessenen Signal $H_m$ besitzt.

Basierend hierauf können durch Variationen der Anzahl der zu betrachtenden Gitterpunkte und des $\Delta$D unterschiedliche Experten-Routinen bzw. deren Algorithmen aufgebaut werden. Beispielhaft können die nachfolgenden sechs Experten-Routinen für die Entwicklung von auf Korrosion basierten Fehlstellen verwendet werden:

1.

$$p(x, y) = \frac{D(x,y)}{\|D(x,y)\|},$$

N = 1 and $\Delta D$ = 1% Wanddicke

2.

$$p(x, y) = \frac{D(x,y)}{\|D(x,y)\|},$$

N = 2 and $\Delta D$ = 5% Wanddicke

3.

$$p(x, y) = \frac{D(x,y)}{\|D(x,y)\|},$$

N = 3 and $\Delta D$ = 5% Wanddicke

4.

$$p(x, y) = \frac{H_{the\ best}(x,y) - H_m(x,y)}{\|H_{the\ best}(x,y) - H_m(x,y)\|},$$

N = 1 und $\Delta D$ = 1% Wanddicke

5.

$$p(x,y) = \frac{H_{the\ best}(x,y) - H_m(x,y)}{\|H_{the\ best}(x,y) - H_m(x,y)\|},$$

N = 2 und $\Delta D$ = 5% Wanddicke

6.

$$p(x,y) = \frac{H_{the\ best}(x,y) - H_m(x,y)}{\|H_{the\ best}(x,y) - H_m(x,y)\|},$$

N = 3 und $\Delta D$ = 5% Wanddicke

Für eine Experten-Routine, die für die Variation einer rissbasierten Fehlstelle geeignet ist, können folgende Funktionsvorschriften verwendet werden:

- die Tiefe der Fehlstelle wird zufallsbasiert um einen bestimmten Betrag, vorzugsweise z.B. 1 oder 2 % der Wandstärke des Objekts, verringert oder vergrößert,
- die Position aller Punkte des Risses wird in eine zufällig ausgewählte Richtung variiert, und/oder
- eine den Riss beschreibende Linie wird verlängert oder gekürzt durch die Position der Gitterknoten auf dem Objekt- oder Defektgitter.

Eine Experten-Routine, die einen Laminierdefekt beschreibt, kann nach folgenden Funktionsvorschriften arbeiten:

- Auf Basis der 2D-Parameterbeschreibung eines Laminierdefekts werden die den Gitterknoten zugehörigen Werte schrittweise um 5% in die eine oder andere Richtung variiert mit dem Ziel, die Position der Laminierung zu variieren; dies kann auch nur für eine Teilmenge der Bekannten der 2D-Beschreibung der Lamination,

- zufällig ausgewählte Punkte (Gitterknoten) mit Werten ungleich Null, die in der Nachbarschaft von Punkten mit Werten von Null besitzen, können auf Null gesetzt werden (Reduzierung der Ausdehnung der Laminierung),

- zufällig ausgewählte Gitterpunkte mit Werten von Null, die in der Nachbarschaft von Gitterpunkten mit Werten ungleich Null befindlich sind, können auf den entsprechenden Nachbarschaftswert gesetzt werden, wodurch die Laminierung vergrößert wird, und/oder

- alle Werte in dem Gitter können in eine zufällig ausgewählte Richtung bewegt werden, womit eine Änderung der Position der Laminierung entlang der Pipelineoberfläche einhergeht.

Die in Fig. 7 dargestellte Überwachungs-Routine 9 hat wie beschrieben insbesondere zwei Funktionen: Zum einen wird das Erreichen des Stopp-Kriteriums überprüft und zum zweiten werden die Zuweisung der Ressourcen der EDV-Einheit zwischen den einzelnen Experten basierend auf deren Erfolgen vorgenommen. Ein Maß für den Erfolg ist

$$P = \frac{\Delta F}{N},$$

wobei $\Delta F$ die Reduktion der Fitnessfunktion F durch das Ergebnis der jeweiligen Experten-Routine und in diesem Fall nun N die Anzahl der hierfür notwendigen Simulationen ist. Eine Bewertung der n Experten-Routinen kann als

$$R_n = \frac{P_n}{\sum P_i}.$$

angenommen werden. Die Anzahl der Rechen-Slots $N_S$ für eine Experten-Routine in einer Iteration ist dann

$$N_S = int(R_n\ N_{all}),$$

wobei $N_{all}$ die Anzahl aller verfügbaren Slots ist.

In den Simulations-Routinen 16 werden die jeweiligen zerstörungsfreien Messungen für die Experten-Fehlstellengeometrien simuliert. Eine Experten-Routine kann solange iterieren, bis sie eine Lösung findet, deren Experten-Vorhersagedatensätze besser sind als die im Bereich 12 gespeicherten Ausgangsvorhersagedatensätze. Wenn dies der Fall ist, kann die Experten-Routine 11 ausgehend von der bereits verbesserten Lösung versuchen, weitere bessere Lösungen zu erreichen.

Ein sich ergebende Fehler E für die einzelnen Betrachtungen der simulierten und gemessenen Datensätze kann sich aus den Fehlern der jeweiligen Datensätzen in den einzelnen Kalkulationen ergeben:

$$E = \sum_i \left\| Y_{cal}^i(D) - Y_m^i \right\|,$$

wobei Ym und Ycal die vorbeschriebenen, jeweiligen gemessenen und simulierten Messfelder an den Fehlstellengeometrien (x1...xn) darstellen.

Aufgrund des erfindungsgemäßen Verfahrens lassen sich der Zustand eines Rohres und damit der für einen sicheren Betrieb der Pipeline angebbare Druck deutlich realistischer angeben, während die Betriebssicherheit nach wie vor gewährleistet ist. Durch das erfindungsgemäße Verfahren mit den um Ressourcen der EDV-Einheit konkurrierenden Experten-Routinen kann ein solches Ergebnis schneller oder zumindest in gleicher Auswertezeit wie im Stand der Technik den Betreibern von Pipelines zur Verfügung gestellt werden.

**Patentansprüche**

1. Verfahren zur Bestimmung der Geometrie eines metallischen, insbesondere magnetisierbaren Objektes, insbesondere eines Rohres oder eines Tanks, mit insbesondere einer oder mehrerer realer, untersuchter Fehlstellen, mit einem auf Basis zumindest einer Messung durch zumindest ein zerstörungsfreies Messverfahren erzeugten Referenzdatensatz des Objekts,
umfassend vorzugsweise eine zumindest teilweise Darstellung des Objekts auf einem oder durch ein zumindest dreidimensionales Objektgitter mittels einer EDV-Einheit, wobei auf Basis von zumindest Teilen des zumindest einen Referenzdatensatzes eine Klassifizierung von anomaliefreien Bereichen und anomaliebehafteten Bereichen des Objekts erfolgt, wobei auf Basis von vorbekannten Informationen über das Objekt ein Ausgangsobjektgitter erstellt wird, unter Verwendung des Ausgangsobjektgitters durch eine Simulationsroutine ein Vorhersagedatensatz des zumindest einen zerstörungsfreien Messverfahrens errechnet wird, ein Vergleich von zumindest Teilen des Vorhersagedatensatzes mit zumindest Teilen des zumindest einen Referenzdatensatzes unter Ausschluss der anomaliebehafteten Bereiche erfolgt und in Abhängigkeit von zumindest einem Genauigkeitsmaß das Ausgangsobjektgitter als die Geometrie des Objekts beschreibendes Objektgitter verwendet wird oder mittels der EDV-Einheit eine iterative Anpassung des Ausgangsobjektgitters an die Geometrie des Objekts in den anomaliefreien Bereichen erfolgt, wobei bei der Iteration ein neues Ausgangsobjektgitter erstellt und für dieses durch die Simulationsroutine ein neuer Vorhersagedatensatz errechnet wird und ein Vergleich von zumindest Teilen des neuen Vorhersagedatensatzes mit zumindest Teilen des zumindest einen Referenzdatensatzes unter Ausschluss der anomaliebehafteten Bereiche erfolgt bis ein Stopp-Kriterium vorliegt und das dann vorliegende Ausgangsobjektgitter als die Geometrie des Objekts beschreibendes Objektgitter verwendet wird.

2. Verfahren nach Anspruch 1, **dadurch gekennzeichnet, dass** eine Interpolation oder Extrapolation von Informationen des Referenzdatensatzes und/oder Objektgitters von den anomaliefreien Bereichen in die anomaliebehafteten Bereiche erfolgt.

3. Verfahren nach Anspruch 1 oder 2, **dadurch gekennzeichnet, dass** die Simulationsroutine durch Vorgabe von Parametern eingerichtet wird, die Materialeigenschaften des Objektes, die Geometrie eines im zerstörungsfreien Messverfahren verwendeten Sensors, den Abstand des Sensors von der Objektoberfläche und/oder Betriebsbedingungen des Sensors repräsentieren.

4. Verfahren nach einem der vorherigen Ansprüche, **dadurch gekennzeichnet, dass** die Klassifizierung auf Basis von zumindest Teilen von zumindest zwei durch unterschiedliche zerstörungsfreie Messverfahren erhaltenen Referenzdatensätzen erfolgt.

5. Verfahren nach einem der vorherigen Ansprüche, **dadurch gekennzeichnet, dass** ein erster auf Basis eines MFL-Messverfahrens, insbesondere mit axialer oder umlaufender Magnetisierung erzeugter Referenzdatensatz, und zumindest ein weiterer auf Basis eines Wirbelstrom-, EMAT- oder Ultraschall-Messverfahrens erzeugter Referenzdatensatz verwendet wird.

**6.** Verfahren nach einem der vorherigen Ansprüche, **dadurch gekennzeichnet, dass** bei der Klassifizierung eine Zuordnung eines anomaliefreien Bereichs zu einem vordefinierten lokalen Element des Objektes erfolgt und dieses bei der Erstellung des Ausgangsobjektgitters verwendet oder in das Ausgangsobjektgitter eingefügt wird.

**7.** Verfahren nach Anspruch 6, **dadurch gekennzeichnet, dass** das lokale Element, insbesondere in Form einer Schweißnaht, mittels eines parametrischen Geometriemodels beschrieben wird.

**8.** Verfahren nach Anspruch 7, **dadurch gekennzeichnet, dass** bei der iterativen Anpassung des Ausgangsobjektgitters eine Veränderung zumindest eines Parameters des parametrischen Geometriemodels erfolgt.

**9.** Verfahren nach einem der vorherigen Ansprüche, **dadurch gekennzeichnet, dass** die iterative Anpassung des Ausgangsobjektgitter durch Gittermodifikation erfolgt.

**10.** Verfahren nach einem der vorherigen Ansprüche, **dadurch gekennzeichnet, dass** bei der iterativen Anpassung des Ausgangsobjektgitter das Ausgangsobjektgitter durch Berechnen eines neuen Gitters innerhalb einer veränderten Kontur des Ausgangsobjektgitters erstellt wird.

**11.** Verfahren nach einem der vorherigen Ansprüche, **dadurch gekennzeichnet, dass** das Objektgitter zur Bestimmung von Fehlstellengeometrien in den anomaliebehafteten Bereichen verwendet wird, wobei

die Geometrie einer oder mehrerer realer, untersuchter Fehlstellen eines metallischen und insbesondere magnetisierbaren Objekts, insbesondere eines Rohres oder eines Tanks, mittels zumindest zweier auf Basis unterschiedlicher, zerstörungsfreier Messverfahren erzeugter Referenzdatensätze des Objekts bestimmt wird,

- wobei das Objekt zumindest teilweise auf dem oder durch das zumindest zweidimensionale, vorzugsweise dreidimensionale Objektgitter in einer EDV-Einheit dargestellt wird,
- umfassend eine Bestimmung zumindest einer anfänglichen Fehlstellengeometrie als Ausgangsfehlstellengeometrie,
- Bestimmung jeweiliger Vorhersagedatensätze als Ausgangsvorhersagedatensätze auf Basis der Ausgangsfehlstellengeometrie durch Simulation oder Zuweisung einer zum jeweiligen Referenzdatensatz passenden Messung,
- iterative Anpassung der Ausgangsfehlstellengeometrie an die Geometrie der realen Fehlstelle(n) mittels der EDV-Einheit und mittels zumindest einer, vorzugsweise mehrerer, insbesondere im Wettbewerb und weiter insbesondere parallel zueinander laufender Experten-Routinen (11),
- wobei in der bzw. den jeweiligen Experten-Routinen (11) mittels wenigstens eines eigenen Algorithmus und auf Basis der Ausgangsfehlstellengeometrie eine jeweilige Experten-Fehlstellengeometrie erzeugt wird,
- auf Basis der jeweiligen Experten-Fehlstellengeometrie jeweilige Experten-Vorhersagedatensätze durch Simulation oder Zuweisung einer zum jeweiligen Referenzdatensatz passenden Messung bestimmt werden,
- und die den jeweiligen Experten-Vorhersagedatensätzen zugrunde liegende Experten-Fehlstellengeometrie dann wenigstens einer, insbesondere allen der Experten-Routinen (11) als neue Ausgangsfehlstellengeometrie zur weiteren Anpassung an die Geometrie der realen Fehlstelle(n) zur Verfügung gestellt wird, wenn die Experten-Vorhersagedatensätze einer jeweiligen Experten-Routine (11) den jeweiligen Referenzdatensätzen ähnlicher sind als die Ausgangsvorhersagedatensätze und/oder eine die zumindest zwei Experten-Vorhersagedatensätze berücksichtigende Fitnessfunktion verbessert ist,
- und anschließend die zur neuen Ausgangsfehlstellengeometrie gehörenden Experten-Vorhersagedatensätze als neue Ausgangsvorhersagedatensätze verwendet werden,
- wobei die iterative Anpassung mittels der Experten-Routinen (11) solange erfolgt, bis ein Experten-Stopp-Kriterium erfüllt ist.

**12.** Verfahren nach Anspruch 11, **dadurch gekennzeichnet, dass** als erster Referenzdatensatz ein Datensatz auf Basis eines MFL-, Wirbelstrom-, EMAT- oder Ultraschall-Messverfahrens und zumindest ein weiterer Referenzdatensatz ein auf Basis eines weiteren aus dieser Gruppe von Messverfahren stammenden Messverfahrens erzeugter Datensatz verwendet wird.

**13.** Verfahren nach einem der Ansprüche 11 oder 12, **dadurch gekennzeichnet, dass** die Experten-Routinen (11) dergestalt im Wettbewerb zueinander laufen, dass eine Verteilung der Ressourcen der EDV-Einheit an eine jeweilige Experten-Routine (11) insbesondere in Form von Rechenzeit, vorzugsweise CPU- und/oder GPU-Zeit, in Abhängigkeit einer Erfolgsquote, bei der insbesondere die Anzahl der von dieser Experten-Routine (11) berechneten und für eine oder mehrere andere Experten-Routinen (11) zur Verfügung gestellten Ausgangsfehlstellengeometrien berücksichtigt wird, und/oder in Abhängigkeit einer Reduktion der Fitnessfunktion, bei der insbesondere die Anzahl der für die Reduktion erzeugten Experten-Vorhersagedatensätze berücksichtigt wird, erfolgt.

14. Verfahren zur Bestimmung einer Belastbarkeitsgrenze eines zumindest im Betrieb druckbelasteten und insbesondere als Öl-, Gas- oder Wasserpipeline ausgebildeten Objekts, bei dem ein eine oder mehrere Fehlstelle(n) beschreibender Datensatz als Eingangsdatensatz in einer Berechnung der Belastbarkeitsgrenze verwendet wird, **dadurch gekennzeichnet, dass** der Eingangsdatensatz zunächst gemäß einem Verfahren nach einem der vorherigen Ansprüche bestimmt wird.

**Claims**

1. Method for determining the geometry of a metallic, in particular a magnetizable object, in particular a pipe or a tank, in particular having one or more real examined defects, using a reference data set of the object generated on the basis of at least one measurement by at least one nondestructive measurement method,
preferably comprising an at least partial representation of the object on an or by an at least three-dimensional object grid by means of an EDP unit, wherein a classification of anomaly-free areas and anomaly-affected areas of the object takes place on the basis of at least parts of the at least one reference data set, wherein an output object grid is created on the basis of previously known information about the object, a prediction data set of the at least one nondestructive measurement method is calculated using the output object grid by a simulation routine, a comparison of at least parts of the prediction data set with at least parts of the at least one reference data set takes place with exclusion of the anomaly-affected areas, and as a function of at least one accuracy measure, the output object grid is used as the object grid describing the geometry of the object or an iterative adaptation of the output object grid to the geometry of the object in the anomaly-free areas is carried out by means of the EDP unit, wherein a new output object grid is created by the iteration and a new prediction data set is calculated for the new output object grid by the simulation routine and a comparison of at least parts of the new prediction data set to at least parts of the at least one reference data set with exclusion of the anomaly-affected areas takes place until a stop criterion is met and the output object grid then present is used as the object grid describing the geometry of the object.

2. Method according to Claim 1, **characterized in that** an interpolation or extrapolation of information of the reference data set and/or object grid from the anomaly-free areas into the anomaly-affected areas takes place.

3. Method according to Claim 1 or 2, **characterized in that** the simulation routine is configured by specifying parameters which represent material properties of the object, the geometry of a sensor used in the nondestructive measurement method, the distance of the sensor from the object surface, and/or operating conditions of the sensor.

4. Method according to any one of the preceding claims, **characterized in that** the classification takes place on the basis of at least parts of at least two reference data sets obtained by different nondestructive measurement methods.

5. Method according to any one of the preceding claims, **characterized in that** a first reference data set generated on the basis of an MFL measurement method, in particular with axial or circumferential magnetization, and at least one further reference data set generated on the basis of an eddy current, EMAT, or ultrasonic measurement method are used.

6. Method according to any one of the preceding claims, **characterized in that**, in the classification, an assignment of an anomaly-free area to a predefined local element of the object takes place and this is used in the creation of the output object grid or is incorporated into the output object grid.

7. Method according to Claim 6, **characterized in that** the local element, in particular in the form of a weld seam, is described by means of a parametric geometry model.

8. Method according to Claim 7, **characterized in that**, in the iterative adaptation of the output object grid, a change of at least one parameter of the parametric geometry model takes place.

9. Method according to any one of the preceding claims, **characterized in that** the iterative adaptation of the output object grid is carried out by grid modification.

**10.** Method according to any one of the preceding claims, **characterized in that**, in the iterative adaptation of the output object grid, the output object grid is created by calculating a new grid within a changed contour of the output object grid.

**11.** Method according to any one of the preceding claims, **characterized in that** the object grid is used to determine defect geometries in the anomaly-affected areas, wherein
the geometry of one or more real examined defects of a metallic and in particular magnetizable object, in particular a pipe or a tank, is determined by means of at least two reference data sets of the object generated on the basis of different nondestructive measurement methods,

- wherein the object is represented at least partially on the or by the at least two-dimensional, preferably three-dimensional object grid in an EDP unit,
- comprising determining at least one initial defect geometry as the output defect geometry,
- determining respective prediction data sets as output prediction data sets on the basis of the output defect geometry by simulation or assignment of a measurement matching with the respective reference data set,
- iteratively adapting the output defect geometry to the geometry of the real defect(s) by means of the EDP unit and by means of at least one, preferably multiple expert routines (11), which are in particular in composition and furthermore in particular are running in parallel to one another,
- wherein a respective expert defect geometry is generated in the respective expert routine or routines (11) by means of at least one own algorithm and on the basis of the output defect geometry,
- on the basis of the respective expert defect geometry, respective expert prediction data sets are determined by simulation or assignment of a measurement matching with the respective reference data set,
- and the expert defect geometry underlying the respective expert prediction data sets are then provided to at least one, in particular all of the expert routines (11) as the new output defect geometry for further adaptation to the geometry of the real defect(s), if the expert prediction data sets of a respective expert routine (11) are more similar to the respective reference data sets than the output prediction data sets and/or a fitness function taking into consideration the at least two expert prediction data sets is improved,
- and then the expert prediction data sets associated with the new output defect geometry are used as the new output prediction data sets,
- wherein the iterative adaptation by means of the expert routines (11) takes place until an expert stop criterion is met.

**12.** Method according to Claim 11, **characterized in that** a data set based on an MFL, eddy current, EMAT, or ultrasonic measurement method is used as the first reference data set and a data set generated on the basis of a further measurement method originating from this group of measurement methods is used as at least one further reference data set.

**13.** Method according to one of Claims 11 or 12, **characterized in that** the expert routines (11) run in competition with one another such that a distribution of the resources of the EDP unit to a respective expert routine (11), in particular in the form of computing time, preferably CPU and/or GPU time, takes place as a function of a success rate, in which in particular the number of the output defect geometries calculated by this expert routine (11) and provided for one or more other expert routines (11) is taken into consideration, and/or as a function of a reduction of the fitness function, in which in particular the number of the expert prediction data sets generated for the reduction is taken into consideration.

**14.** Method for determining a capacity limit of an object, which is pressure-loaded at least in operation and in particular is designed as an oil, gas, or water pipeline, in which a data set describing one or more defect(s) is used as an input data set in a calculation of the capacity limit, **characterized in that** the input data set is initially determined according to a method according to any one of the preceding claims.

**Revendications**

**1.** Procédé de détermination de la géométrie d'un objet métallique, notamment magnétisable, notamment d'un tube ou d'un réservoir, présentant notamment un ou plusieurs défauts réels examinés, avec un ensemble de données de référence de l'objet généré sur la base d'au moins une mesure effectuée par au moins un procédé de mesure non destructif, le procédé de détermination comprenant de préférence une représentation au moins partielle de l'objet sur ou à travers une grille d'objets au moins tridimensionnelle à l'aide d'une unité informatique, une classification de zones exemptes d'anomalies et de zones affectées par des anomalies de l'objet étant effectuée sur la base d'au moins des parties de l'au moins un ensemble de données de référence, une grille d'objet initiale étant créée sur la base d'informations déjà connues sur l'objet, un ensemble de données de prédiction de l'au moins un procédé de mesure non destructif étant calculé à l'aide de la grille d'objet initiale par une routine de simulation, une comparaison au moins de parties de l'ensemble de données de prédiction à au moins des parties dudit au moins un ensemble de données de référence étant effectuée à l'exclusion des zones affectées par des anomalies et, en fonction d'au moins une mesure de précision, la grille d'objet initiale est utilisée comme grille d'objet décrivant la géométrie de l'objet ou une adaptation itérative de la grille d'objet initiale à la géométrie de l'objet dans les zones exemptes d'anomalies étant effectuée au moyen de l'unité informatique, une nouvelle grille d'objet initiale étant créée au cours de l'itération et pour cela un nouvel ensemble de données de prédiction étant calculé par la routine de simulation et une comparaison au moins de parties du nouvel ensemble de données de prédiction à au moins des parties de l'au moins un ensemble de données de référence étant effectuée à l'exclusion des zones affectées par des anomalies jusqu'à ce qu'un critère d'arrêt soit présent puis la présente grille d'objet initiale étant utilisée comme grille d'objet décrivant la géométrie de l'objet.

2. Procédé selon la revendication 1, **caractérisé en ce qu'**une interpolation ou extrapolation d'informations de l'ensemble de données de référence et/ou de la grille d'objet étant effectuée depuis les zones exemptes d'anomalies vers les zones affectées par des anomalies.

3. Procédé selon la revendication 1 ou 2, **caractérisé en ce que** la routine de simulation est ajustée par spécification de paramètres qui représentent les propriétés matérielles de l'objet, la géométrie d'un capteur utilisé dans le procédé de mesure non destructif, la distance du capteur à la surface de l'objet et/ou des conditions de fonctionnement du capteur.

4. Procédé selon l'une des revendications précédentes, **caractérisé en ce que** la classification est effectuée sur la base au moins de parties d'au moins deux ensembles de données de référence obtenues par des procédés de mesure non destructifs différents.

5. Procédé selon l'une des revendications précédentes, **caractérisé par** l'utilisation d'un premier ensemble de données de référence généré sur la base d'un procédé de mesure de densité de flux de dispersion magnétique, en particulier avec magnétisation axiale ou circonférentielle, et d'au moins un autre ensemble de données de référence généré sur la base d'un procédé de mesure par courants de Foucault, par une technique électro-magnéto-acoustique ou par ultrasons.

6. Procédé selon l'une des revendications précédentes, **caractérisé en ce que**, lors de la classification, une association d'une zone exempte d'anomalie à un élément local prédéfini de l'objet est effectuée et cette association est utilisée lors de la création de la grille d'objet initiale ou est insérée dans la grille d'objet initiale.

7. Procédé selon la revendication 6, **caractérisé en ce que** l'élément local, se présentant notamment sous forme de cordon de soudure, est décrit au moyen d'un modèle géométrique paramétrique.

8. Procédé selon la revendication 7, **caractérisé en ce qu'**une variation d'au moins un paramètre du modèle géométrique paramétrique est effectuée lors de l'adaptation itérative de la grille d'objet initiale.

9. Procédé selon l'une des revendications précédentes, **caractérisé en ce que** l'adaptation itérative de la grille d'objet initiale est effectuée par modification de la grille.

10. Procédé selon l'une des revendications précédentes, **caractérisé en ce que**, lors de l'adaptation itérative de la grille d'objet initiale, la grille d'objet initiale est créée par calcul d'une nouvelle grille à l'intérieur d'un contour modifié de la grille d'objet initiale.

11. Procédé selon l'une des revendications précédentes, **caractérisé en ce que** la grille d'objet est utilisée pour déterminer des géométries de défauts dans les zones affectées par des anomalies,
la géométrie d'un ou plusieurs défauts réels examinés d'un objet métallique et en particulier magnétisable, en particulier d'un tube ou d'un réservoir, étant déterminée au moyen d'au moins deux ensembles de données de référence de l'objet générés sur la base de procédés de mesures non destructifs différents,

- l'objet étant au moins partiellement représenté sur ou à travers la grille d'objet au moins bidimensionnelle, de préférence tridimensionnelle, dans une unité informatique,

- ledit procédé comprenant une détermination d'au moins une première géométrie de défaut comme géométrie de défaut initiale,
- la détermination d'ensembles de données de prédiction respectifs comme ensembles de données de prédiction initiaux sur la base de la géométrie de défaut initiale par simulation ou attribution d'une mesure qui correspond à l'ensemble de données de référence respectif,
- l'adaptation itérative de la géométrie de défaut initiale à la géométrie du ou des défauts réels au moyen de l'unité informatique et au moyen d'au moins une, de préférence plusieurs, routines expertes (11), notamment en compétition et plus particulièrement en parallèle,
- une géométrie de défaut experte respective étant générée dans la ou les routines expertes respectives (11) au moyen d'au moins un algorithme propre et sur la base de la géométrie de défaut initiale,
- sur la base de la géométrie de défaut experte respective, des ensembles de données de prédiction experts respectifs étant déterminés par simulation ou attribution d'une mesure qui correspond à l'ensemble de données de référence respectif,
- et la géométrie de défaut experte sur laquelle sont basés les ensembles de données de prédiction experte respectifs étant ensuite mise à la disposition d'au moins une des routines expertes (11), en particulier de toutes, comme nouvelle géométrie de défaut initiale pour une adaptation ultérieure à la géométrie du ou des défauts réels lorsque les ensembles de données de prédiction experts d'une routine experte respective (11) sont davantage similaires aux ensembles de données de référence respectifs que les ensembles de données de prédiction initiaux et/ou qu'une fonction de fitness prenant en compte lesdites au moins deux ensembles de données de prédiction experts est améliorée,
- puis les ensembles de données de prédiction experts appartenant à la nouvelle géométrie de défaut initiale sont utilisés comme nouveaux ensembles de données de prédiction initiaux,
- l'adaptation itérative étant effectuée à l'aide des routines expertes (11) jusqu'à ce qu'un critère d'arrêt expert soit satisfait.

**12.** Procédé selon la revendication 11, **caractérisé en ce qu'**un ensemble de données basé sur un procédé de mesure par courants de Foucault, par une technique électro-magnéto-acoustique ou par ultrasons est utilisé comme premier ensemble de données de référence et au moins un autre ensemble de données de référence est utilisé comme ensemble de données généré sur la base d'un autre procédé de mesure issu de ce groupe de procédés de mesure.

**13.** Procédé selon l'une des revendications 11 ou 12, **caractérisé en ce que** les routines expertes (11) fonctionnent en compétition les unes avec les autres de façon à effectuer une distribution des ressources de l'unité informatique vers une routine experte respective (11), notamment sous forme de temps de calcul, de préférence de temps CPU et/ou GPU, en fonction d'un taux de réussite qui prend notamment en compte le nombre de géométries de défaut initiales calculées par cette routine experte (11) et mises à disposition d'une ou plusieurs autres routines expertes (11), et/ou en fonction d'une réduction de la fonction fitness dans laquelle est notamment pris en compte le nombre d'ensembles de données de prédiction experts générés pour la réduction.

**14.** Procédé de détermination d'une limite de charge d'un objet soumis à une pression au moins pendant le fonctionnement et en particulier conçu comme une canalisation de pétrole, de gaz ou d'eau, dans lequel un ensemble de données décrivant un ou plusieurs défauts est utilisé comme ensemble de données d'entrée lors d'un calcul de la limite de charge, **caractérisé en ce que** l'ensemble de données d'entrée est d'abord déterminé selon un procédé selon l'une des revendications précédentes.

Fig. 1

Fig. 2

Fig. 3

Fig. 4

Fig. 5

ILI Datensatz

Datenfilterung

ILI Datensatz

Datenfilterung

ILI Datensatz

Datenfilterung

Fusion ähnlicher Datensätze

Vorprozessierte Datensätze

Auswahl nächster Datensatz

Generiere Anfangslösung

Selektiere Fehlstellen- gitter (Paramter-Raum)

Suche Defektprofil für selektiertes Fehlstellen- gitter und Datensatz

14.1

Ja

Nein

Ausgabe Defektprofile und Genauigkeit der Lösung

14.2

Fig. 6

Fig. 7

EP 3 722 799 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160187523 A1
- US 6541964 B1